# EUROPEAN PATENT SPECIFICATION

(11) **EP 4 116 153 B1**
(45) Date of publication and mention of the grant of the patent: **20.08.2025**
(21) Application number: 21765027.4
(22) Date of filing: 01.02.2021
(51) Int. Cl.: B60R 21/207, B60R 21/233, B60R 21/2338, B60R 21/239, B60R 21/231

(54) **SIDE AIRBAG DEVICE**
SEITENAIRBAGVORRICHTUNG
DISPOSITIF DE COUSSIN DE SÉCURITÉ GONFLABLE LATÉRAL

(30) Priority: 02.03.2020 JP 2020035099
(43) Date of publication of application: 11.01.2023
(73) Proprietor: Autoliv Development AB, 44783 Vargarda (SE)
(72) Inventor: KOBAYASHI, Yuto, Yokohama-shi, Kanagawa 222-8580 (JP); SAKURAI, Tsutomu, Yokohama-shi, Kanagawa 222-8580 (JP)
(74) Representative: Müller Verweyen
(86) International application number: PCT/JP2021/003546
(87) International publication number: WO 2021/176916

(56) References cited:
- WO-A1-2012/108632
- JP-A- 2009 234 538
- JP-A- 2014 069 729
- JP-A- 2014 108 740
- JP-A- 2014 108 740
- JP-A- 2018 144 593
- JP-A- 2019 069 738
- US-A1- 2012 091 697
- US-A1- 2012 119 475
- US-A1- 2012 248 746
- US-A1- 2014 151 984

## Description

### TECHNICAL FIELD

The present invention relates to a side airbag device provided with a bag-shaped cushion that expands and deploys to a side of an occupant of a vehicle seat in the event of a vehicle side impact or the like.

### BACKGROUND TECHNOLOGY

Airbag devices have generally become standard equipment in vehicles in recent years. An airbag device is a safety device that is operated in the event of an emergency such as a vehicle collision or the like to receive and protect an occupant by expanding and deploying a cushion based on gas pressure. As an example, a side airbag device is provided with a bag-shaped cushion that expands and deploys to a side of an occupant of a vehicle seat in the event of a vehicle side impact or the like.

Normally, when a vehicle receives an impact in a lateral direction, the occupant moves in a vehicle width direction. For example, in the event of a side impact in which an object such as another vehicle, a utility pole, or the like (impact object) impacts a front passenger seat side door, there are two main types of side airbags that protect an occupant. The first is a so-called near-side airbag, which expands and deploys between a front passenger seat and a side door, preventing an occupant in the front passenger seat from being impacted by the side door on an impact object contact side (near side for the occupant). The second is a so-called far-side airbag, which expands and deploys between the driver's seat and the front passenger seat and protects an occupant in the driver's seat from being moved to the impact object contact (far side for the occupant), in other words, the center of the vehicle, by the impact from the lateral direction. Document US 2014/151984 A1 discloses a side airbag device according to the preamble of claim 1.

Patent Document 1 describes an occupant restraining system for a vehicle provided with a far-side airbag and a console box. This far-side airbag has a sub-bag with an inflator inside and a main bag. The main bag is supplied with gas ejected from the inflator into the sub-bag through a communicating port. Therefore, with the far-side airbag, the sub-bag expands and deploys earlier and at higher pressure before the main bag.

Patent Document 1 states that a lower portion of the sub-bag can be favorably interposed in a narrow gap between an occupant's waist and the console box, and an upper portion of the sub-bag is supported by an upper surface of the console box and retained firmly to the console box. Therefore, the occupant restraining system for a vehicle of Patent Document 1 can effectively suppress the far-side airbag from moving to an inner side in the vehicle width direction while restraining the occupant.

### PRIOR ART DOCUMENTS

### PATENT DOCUMENTS

[Patent Document 1] Japanese Unexamined Patent Application 2014-108740

### SUMMARY OF THE INVENTION

### PROBLEM TO BE SOLVED BY THE INVENTION

In the occupant restraining system for a vehicle of Patent Document 1, the lower portion of the sub-bag of the far-side airbag is interposed in the narrow gap between the occupant's waist and the console box, and is also in contact with a side surface as well as the upper surface of the console box. Therefore, in Patent Document 1, the deployment behavior of the far-side airbag was difficult to control during expansion and deployment, and thus there is room for improvement with regard to sufficiently restraining and protecting an occupant using a main bag.

In light of the foregoing, an object of the present invention is to provide a side airbag device for which the deployment behavior of a cushion during expansion and deployment can readily be controlled and that can reliably receive and protect an occupant.

### MEANS FOR SOLVING THE PROBLEMS

In order to solve the aforementioned problem, a typical configuration of a side airbag device according to the present invention is defined by claim 1 whereby the side airbag device, includes:
an inflator that supplies gas; and
a bag-shaped cushion that expands and deploys on a far side of a vehicle seat using the gas from the inflator; where
the cushion includes:
   a first chamber that restrains an occupant during expansion and deployment, the first chamber expanding and deploying at a position higher than an upper surface of a console box disposed between the vehicle seat and an adjacent seat positioned on the far side of the vehicle seat; and
   a second chamber connected to the first chamber via a vent hole, the second chamber being in frictional contact with the upper surface of the console box during expansion and deployment.

In the configuration described above, the cushion has the second chamber connected to the first chamber via the vent hole that makes frictional contact with the upper surface of the console box during expansion and deployment. Therefore, movement of the second chamber across the upper surface of the console box in the vehicle width direction is suppressed, making sliding difficult. Thereby, the second chamber can receive a sufficient reaction force from the upper surface of the console box during expansion and deployment to support the first chamber as a backing of the first chamber that restrains an occupant. As a result, even if the occupant falls toward a center side of the vehicle, the first chamber is supported by the second chamber, and greatly expands in an up-down direction and front-rear direction from an occupant's shoulder to the waist during expansion and deployment to reliably receive and protect the occupant.

The first chamber expands at a higher position than the upper surface of the console box, and therefore does not enter a gap between the vehicle seat and the console box. Furthermore, the second chamber makes frictional contact with the upper surface of the console box during expansion and deployment and does not bulge into a side surface of the console box. Because the cushion is provided with such first chamber and second chamber, the deployment behavior thereof is easy to control. Therefore, the aforementioned configuration can easily control the deployment behavior of the cushion during expansion and deployment and can reliably receive and protect an occupant.

The second chamber described above is provided on a far side of a lower end part of the first chamber. Thereby, the cushion can have a shape where only the lower end part of the first chamber extends in the vehicle width direction, thus providing an occupant restraining force equivalent to an overall increase in the thickness in the vehicle width direction without increasing the overall gas volume.

The inflator described above is positioned inside the first chamber. Therefore, the first chamber can receive a gas supply directly from the inflator and expand and deploy at a higher pressure and earlier than the second chamber, thus reliably receiving and protecting the occupant.

A side surface on a near side of the second chamber described above is preferably inclined upwardly away from the vehicle seat, and the second chamber preferably has a triangular shape when viewed from the front of the vehicle, and is preferably connected to the first chamber on a side surface of the near side. Thereby, when in frictional contact with the upper surface of the console box during expansion and deployment, the second chamber can receive a reaction force from the upper surface of the console box such that the inclined near-side side surface connected to the first chamber can push on the first chamber. Furthermore, the inclined side surface of the second chamber is then subjected to a reaction force from the first chamber. The reaction force received by the inclined side surface of the second chamber from the first chamber causes a downward component force in the second chamber in addition to a component force in a direction away from the vehicle seat. The second chamber can press more strongly downward on the upper surface of the console box due to the downward component force. Furthermore, in the second chamber, a frictional force on the upper surface of the console box is proportional to a component force in the up-down direction, making sliding across the upper surface of the console box more difficult.

The second chamber described above is preferably rectangular in shape as viewed from the front of the vehicle, and is preferably connected to the first chamber on a near-side side surface. Thereby, the second chamber, when in frictional contact with the upper surface of the console box during expansion and deployment, can receive a reaction force from the upper surface of the console box to press the first chamber by the near-side side surface connected to the first chamber. Furthermore, the second chamber is then deformed by being pushed on by the first chamber, and an upper corner part of the near-side side surface, for example, receives a reaction force from the first chamber. The reaction force received by the upper corner part of the second chamber from the first chamber causes a downward component force on the second chamber in addition to a component force in a direction away from the vehicle seat. The second chamber can press more strongly downward on the upper surface of the console box due to the downward component force, making sliding across the upper surface of the console box more difficult.

The coefficient of friction of a bottom surface of the second chamber described above that is in frictional contact with the upper surface of the console box is preferably greater than the coefficient of friction of another surface. Thereby, the second chamber has a bottom surface with a large coefficient of friction and is in frictional contact with the upper surface of the console box; therefore, sliding across the upper surface of the console box during expansion and deployment is more difficult.

Silicone coating is preferably performed on the bottom surface of the second chamber described above. Thus, the bottom surface of the second chamber can be formed by performing silicone coating. Furthermore, it is more difficult for the bottom surface of the second chamber to slide on the upper surface of the console box.

The first chamber described above has a higher internal pressure than the second chamber and caves into the second chamber during expansion and deployment. Thereby, the first chamber can have a larger contact area with the second chamber during expansion and deployment, and can receive a sufficient reaction force from the second chamber to reliably receive and protect an occupant.

The side airbag device described above preferably further includes a taut tether that reaches from a front end of the second chamber to a rear end of the second chamber via a seat frame of the vehicle seat during expansion and deployment of the second chamber.

Thereby, the second chamber moving in a direction away from the occupant side can be suppressed by the tether enabling reliable support of the first chamber. Furthermore, by arranging the tether through the seat frame, the width of the seat frame in the front-rear direction of the vehicle can be used, simplifying connecting the front end and rear end of the second chamber. Note that the tether may be arranged so as to pass through the first chamber or arranged so as to not pass through the first chamber, so long as the front end and rear end of the second chamber can be connected through the seat frame.

The lower end part of the first chamber described above is preferably positioned above the bottom surface of the second chamber. Thereby, only the bottom surface of the second chamber of the cushion is in frictional contact with the upper surface of the console box and receives a reaction force during expansion and deployment, making sliding across the upper surface of the console box more difficult.

Silicone coating is preferably performed on the bottom surface of the second chamber described above. Thereby, in addition to the connection between the inflator and seat frame, the silicone-coated bottom surface of the second chamber increases the difficulty of sliding on the upper surface of the console box.

The side airbag device described above preferably further includes a check valve provided in the vent hole, and the check valve preferably prevents backflow of gas from the second chamber that does not have an inflator inside to the first chamber that has an inflator inside.

### EFFECT OF THE INVENTION

The present invention can provide a side airbag device for which controlling the deployment behavior of a cushion during expansion and deployment can be readily achieved and that can reliably receive and protect an occupant.

### BRIEF DESCRIPTION OF THE DRAWINGS

FIG. 1 is a diagram illustrating a vehicle seat and a portion of a vehicle to which a side airbag device according to an Embodiment of the present invention is applied.
FIG. 2 is a diagram illustrating the side airbag device in FIG. 1.
FIG. 3 is a diagram illustrating the side airbag device in FIG. 2(a).
FIG. 4 is a diagram illustrating modified examples of the side airbag device in FIG. 2, which are not part of the present invention.
FIG. 5 is a diagram illustrating a side airbag device according to another arrangement which is not part of the present invention.
FIG. 6 is a diagram illustrating a modified example of the cushion in FIG. 3.
FIG. 7 is a diagram illustrating another modified example of the cushion in FIG. 3.
FIG. 8 is a diagram illustrating a modified example of the cushion in FIG. 7(b).
FIG. 9 is a diagram illustrating yet another modified example of the cushion in FIG. 3.

### MODE FOR CARRYING OUT THE INVENTION

Preferred Embodiments according to the present invention will hereinafter be described in detail with reference to the attached drawings. Dimensions, materials, other specific numerical values, and the like indicated in the Embodiments are merely examples for ease of understanding of the invention and do not limit the present invention unless otherwise noted. Note that in the present specification and drawings, elements having essentially identical functions and configurations are labeled with identical symbols in order to omit redundant descriptions along with an illustration of elements not directly related to the present invention.

Note that regarding this Embodiment, when an occupant is seated in a seat in a regular posture, the direction the occupant faces is referred to as front, and the opposite direction is referred to as rear. Furthermore, when the occupant is seated in the seat in a regular posture, the right of the occupant is referred to as the right direction, and the left of the passenger is referred to as the left direction. Furthermore, when the occupant is seated in a regular posture, the direction towards the head of the occupant is referred to as up, and the direction towards the legs of the occupant is referred to as down. Furthermore, as needed, any diagrams used in descriptions below will indicate the front, rear, left, right, up, and down directions based on the occupant as described above as Front, Rear, Left, Right, Up, and Down.

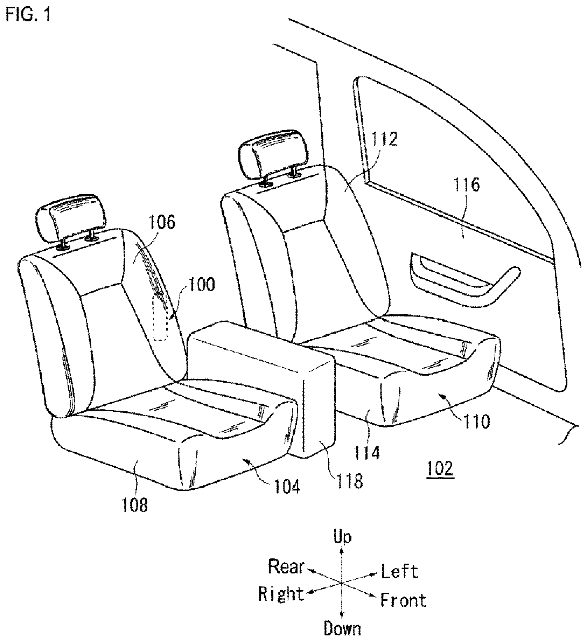

FIG. 1 is a diagram illustrating a vehicle seat 104 and a portion of a vehicle 102 to which a side airbag device 100 according to an Embodiment of the present invention is applied. As indicated by the dotted lines in the drawing, the side airbag device 100 is embedded in a side portion on a center side of the vehicle of a seat back 106 of the vehicle seat 104. The vehicle seat 104 is a right-side front seat (in other words, a driver's seat) in the vehicle 102 and has the seatback 106 as well as a seat cushion 108 on which an occupant is seated.

An adjacent seat (vehicle seat 110) adjacent to the vehicle seat 104 is arranged in the vehicle 102. The vehicle seat 110 is a left-side front seat (in other words, a front passenger seat) and has a seatback 112 and a seat cushion 114. Furthermore, a side door 116 is positioned on an outer side of the vehicle of the vehicle seat 110. Furthermore, a console box 118 is disposed in the vehicle 102.

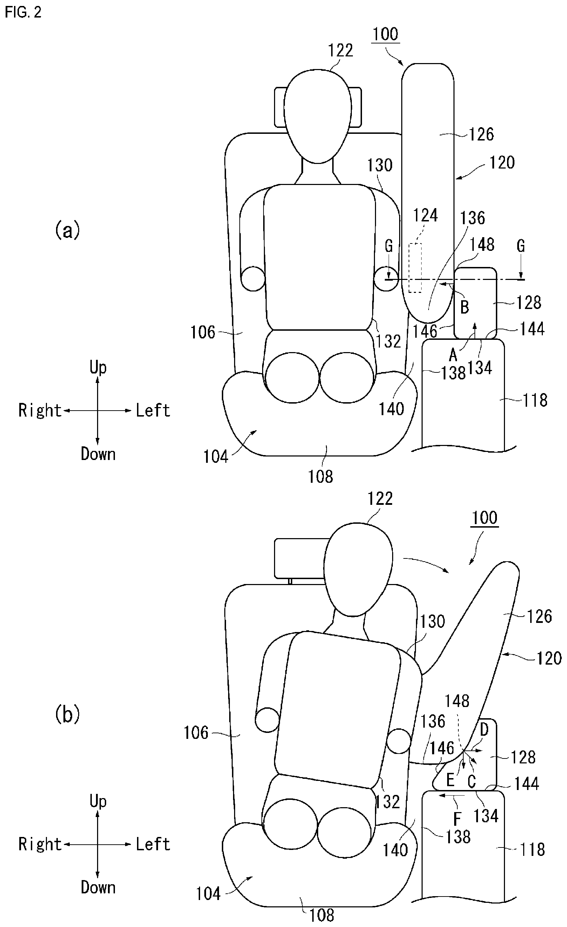

The console box 118 is positioned between the vehicle seats 104, 110 and is therefore positioned on an opposite side of the vehicle from an occupant side of the vehicle seat 104, in other words, on the center side of the vehicle, which is a far side as viewed from the occupant. In addition, the side airbag device 100 is provided with a bag-shaped cushion 120 (refer to FIG. 2) that expands and deploys to the far side of the vehicle seat 104 in the event of a vehicle side impact or the like. Note that the side airbag device 100 may be embedded in a side surface on the center side of the vehicle of a seatback 112 of the vehicle seat 110.

FIG. 2 is a diagram illustrating the side airbag device 100 in FIG. 1. FIG. 2(a) illustrates the side airbag device 100 in a state where the cushion 120 is expanded and deployed as viewed from a side of the vehicle. FIG. 2(b) illustrates a condition where an occupant 122 in FIG. 2(a) moves to the center side of the vehicle.

The side airbag device 100 has an inflator 124, which is indicated by the dotted lines in FIG. 2(a), in addition to the cushion 120. The cushion 120 is formed into a bag shape by spinning and weaving, for example, using OPW (One-Piece Woven). The inflator 124 is a gas generating device. The cushion 120 is expanded and deployed using gas supplied from the inflator 124 in the event of an emergency, such as when the vehicle 102 is impacted, or the like. The cushion 120 expands and deploys between the vehicle seat 104 and vehicle seat 110 as illustrated in FIG. 1 and functions as a so-called far-side airbag.

The cushion 120 has a first chamber 126 and a second chamber 128. The first chamber 126 is a chamber that restrains the occupant 122 during expansion and deployment. As illustrated in FIG. 2(a), the first chamber 126 receives and protects the occupant 122 in a state greatly expanded from a shoulder 130 to the waist 132 of the occupant 122 in the up-down direction and front-rear direction.

Furthermore, as illustrated in FIG. 2(a), the first chamber 126 expands and deploys at a position higher than an upper surface 134 of the console box 118. Therefore, a lower end part 136 of the first chamber 126 is positioned above the upper surface 134 of the console box 118 and does not enter into a gap 140 between the seatback 106 of the vehicle seat 104 and a side surface 138 of the console box 118. Furthermore, the inflator 124 is positioned inside the first chamber 126.

Herein, as illustrated in FIG. 2(b), when the occupant 122 falls toward the center side of the vehicle in the event of an impact, the first chamber 126 that receives the occupant 122 receives a load toward the center side of the vehicle and tends to move to the far side. Therefore, a second chamber 128 that supports the first chamber 126 as a backing of the first chamber 126 is provided in the side airbag device 100.

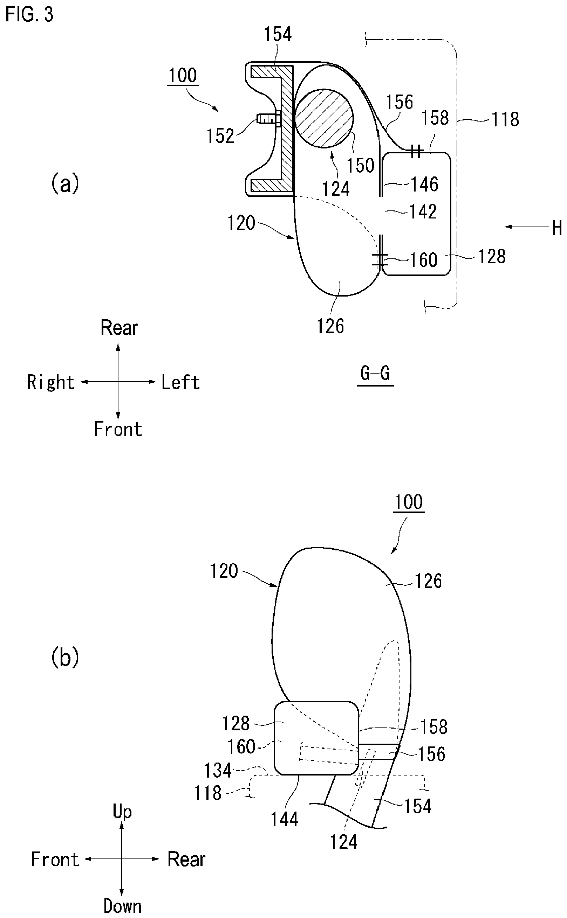

The second chamber 128 is a chamber on the far side of the lower end part 136 of the first chamber 126 illustrated in FIG. 2(a) and is connected to the first chamber 126 via a vent hole 142 (refer to FIG. 3(a)). Furthermore, a bottom surface 144 of the second chamber 128 is in frictional contact with the upper surface 134 of the console box 118 during expansion and deployment, as illustrated in FIG. 2(a).

As illustrated in FIG. 2(a), the second chamber 128 is rectangular in shape as viewed from the front of the vehicle, and is preferably connected to the first chamber 126 on a near-side side surface 146. Therefore, the second chamber 128 receives a reaction force A from the upper surface 134 of the console box 118 when the bottom surface 144 makes frictional contact with the upper surface 134 of the console box 118 during expansion and deployment. Furthermore, the near-side side surface 146 connected to the first chamber 126 of the second chamber 128 pushes on the first chamber 126 with a force B.

Furthermore, the first chamber 126 contains the inflator 124 therein, and thus can receive gas supply directly from the inflator 124 and expand and deploy at a higher pressure and earlier than the second chamber 128. Therefore, the first chamber 126 has a higher internal pressure than the second chamber 128 and caves into the second chamber 128 during expansion and deployment as illustrated in FIG. 2(b). In other words, the second chamber 128 is deformed due to being pushed on by the first chamber 126, and a deformed upper corner part 148 of the near-side side surface 146, for example, receives a reaction force C from the first chamber 126.

The reaction force C received by the upper corner part 148 of the second chamber 128 from the first chamber 126 causes a downward component force E in the second chamber 128 in addition to a component force D in a direction away from the vehicle seat 104. The downward component force E enables the second chamber 128 to more strongly push downward on the upper surface 134 of the console box 118. Therefore, in the second chamber 128, the frictional force F indicated in FIG. 2(b) relative to the upper surface 134 of the console box 118 is proportional to the component force in the up-down direction, making sliding across the upper surface 134 of the console box 118 more difficult.

Therefore, the second chamber 128 can receive a sufficient reaction force from the upper surface 134 of the console box 118 during expansion and deployment to support the first chamber 126 as a support of the first chamber 126 that restrains the occupant 122. As a result, even if the occupant 122 falls toward a center side of the vehicle, the first chamber 126 is supported by the second chamber 128, such that the occupant 122 can be received and protected during expansion and deployment.

In addition, the first chamber 126 caves into the second chamber 128 during expansion and deployment as illustrated in FIG. 2(b), and thus can have a larger contact area with the second chamber 128 during expansion and deployment, and can receive a sufficient reaction force from the second chamber 128 to reliably receive and protect the occupant 122.

Furthermore, silicone coating is performed on the bottom surface 144 of the second chamber 128 that comes into frictional contact with the upper surface 134 of the console box 118, for example. Therefore, the coefficient of friction of the bottom surface 144 of the second chamber 128 is set to be larger than the coefficient of friction of another surface. The coefficient of friction may be a static coefficient of friction or a dynamic coefficient of friction. Thereby, the second chamber 128 has the bottom surface 144 with a large coefficient of friction that is in frictional contact with the upper surface 134 of the console box 118, making sliding across the upper surface 134 of the console box 118 during expansion and deployment more difficult. Note that the bottom surface 144 of the second chamber 128 is not limited to being subjected to silicone coating, so long as the coefficient of friction can be set higher than another surface. As an example, an appropriate material with a greater coefficient of friction than another surface may be attached to the bottom surface 144 of the second chamber 128 by adhering, sewing, or the like.

In addition, the lower end part 136 of the first chamber 126 is positioned above the bottom surface 144 of the second chamber 128 during expansion and deployment as illustrated in FIG. 2(a) and FIG. 2(b). Therefore, of the cushion 120, only the bottom surface 144 of the second chamber 128 is reliably in frictional contact with the upper surface 134 of the console box 118 during expansion and deployment and can receive a reaction force.

Furthermore, the lower end part 136 of the first chamber 126 does not enter into the gap 140 between the vehicle seat 104 and console box 118 during expansion and deployment as illustrated in FIG. 2(a) and FIG. 2(b). Furthermore, the bottom surface 144 of the second chamber 128 makes frictional contact with the upper surface 134 of the console box 118 during expansion and deployment and does not enter a side surface 138 of the console box 118. Because the cushion 120 has such first chamber 126 and second chamber 128, the deployment behavior is easy to control. Therefore, with the side airbag device 100, the deployment behavior of the cushion 120 can easily be controlled during expansion and deployment and the occupant 122 can reliably be received and protected.

In addition, the second chamber 128 described above is provided on a far side of the lower end part 136 of the first chamber 126 as illustrated in FIG. 2(a). Therefore, the cushion 120 can have a shape where, so to speak, only the lower end part 136 of the first chamber 126 extends in the vehicle width direction, and thus provides an occupant restraining force equivalent to an overall increase in the thickness in the vehicle width direction without increasing the overall gas volume.

FIG. 3 is a diagram illustrating the side airbag device 100 in FIG. 2(a). FIG. 3(a) is a cross-sectional view along G-G of the side airbag device 100 in FIG. 2(a). FIG. 3(b) is a view along arrow H in FIG. 3(a).

The inflator 124, as illustrated in FIG. 3(a), is positioned inside the first chamber 126 and has a main body 150 and a stud bolt 152 protruding from the main body 150. The inflator 124 is secured to the seat frame 154 by the stud bolt 152. The seat frame 154 is a member serving as a skeletal structure of the seatback 106 of the vehicle seat 104, is internally provided in the seatback 106 along a side portion of the seatback 106, and has a width in the front-rear direction of the vehicle.

The side airbag device 100 is further provided with a tether 156. As illustrated in FIG. 3(a), the tether 156 is arranged so as to reach a rear end 158 of the second chamber 128 from a front end 160 of the second chamber 128 via the occupant 122 side of the seat frame 154 of the vehicle seat 104. As illustrated in FIG. 3(a), the tether 156 is arranged to pass through the inside of the first chamber 126. Note that the tether 156 is attached to the seat frame 154 using, for example, the stud bolt 152 on the occupant 122 side of the seat frame 154. Furthermore, the tether 156 is set to a length so as to be taut during expansion and deployment of the second chamber 128.

Therefore, the second chamber 128 moving in a direction away from the occupant 122 can be suppressed side by the tension of the taut tether 156 during expansion and deployment, and can thus reliably support the first chamber 126. In addition, in the side airbag device 100, the width of the seat frame 154 in the vehicle front-rear direction can be utilized by arranging the tether 156 through the occupant 122 side of the seat frame 154; therefore, the front end 160 and rear end 158 of the second chamber 128 can be easily connected. Note that the tether 156 may be arranged to not pass through the first chamber 126, or a plurality of tethers may be used instead of one, so long as the front end 160 and rear end 158 of the second chamber 128 can be connected through the occupant 122 side of the seat frame 154.

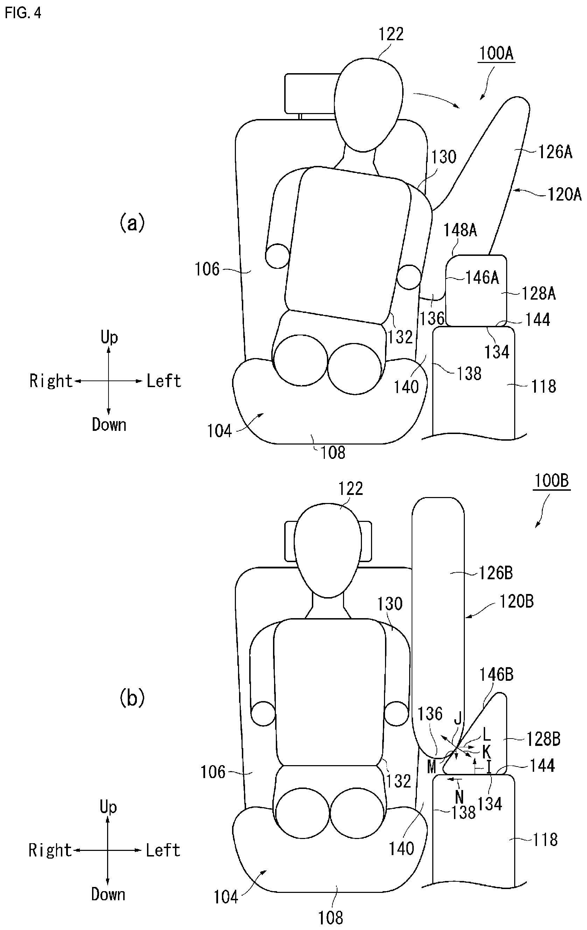

FIG. 4 is a diagram illustrating modified examples of the side airbag device 100 in FIG. 2, which are not part of the present invention. A side airbag device 100A of the modified example illustrated in FIG. 4(a) is different from the side airbag device 100 described above in that a second chamber 128A of a cushion 120A has a higher internal pressure than a first chamber 126A and thus exhibits a behavior of caving into the first chamber 126A during expansion and deployment.

Therefore, as illustrated in FIG. 4(a), the second chamber 128A is not deformed when pressed from first chamber 126A, and an upper corner part 148A of a near-side side surface 146A and a periphery thereof contact the first chamber 126A. Therefore, in the side airbag device 100A, the second chamber 128A can have a larger contact area with the first chamber 126A during expansion and deployment, providing a sufficient reaction force to the first chamber 126A to reliably support the first chamber 126A.

A side airbag device 100B of the modified example illustrated in FIG. 4(b) is different from the side airbag device 100 described above in that a cushion 120B is provided. The cushion 120B has a first chamber B [sic] and a second chamber 128B. The second chamber 128B has a near-side side surface 146B inclined upwardly away from the vehicle seat 104 and is triangular in shape when viewed from the front of the vehicle. Furthermore, the second chamber 128B is connected to the first chamber 126B at the near-side side surface 146B.

Therefore, the second chamber 128B receives a reaction force I from the upper surface 134 of the console box 118 when the bottom surface 144 makes frictional contact with the upper surface 134 of the console box 118 during expansion and deployment. Furthermore, the near-side side surface 146B of the second chamber B [sic] connected to the first chamber 126B pushes on the first chamber 126B with a force J.

Therefore, the inclined side surface 146B of the second chamber 128B is then subjected to a reaction force K from the first chamber 126B. Furthermore, the reaction force K received from the first chamber 126B causes a downward component force M on the second chamber 128B in addition to a component force L in a direction away from the vehicle seat 104. The second chamber 128B can press more strongly downward on the upper surface 134 of the console box 118 due to the downward component force M.

Therefore, in the side airbag device 100B, the second chamber 128 has a frictional force N relative to the upper surface 134 of the console box 118 that is proportional to a component force in the up-down direction, making sliding across the upper surface 134 of the console box 118 more difficult. Note that in FIG. 4(b), the second chamber 128B almost has a right angle triangle shape as viewed from the front of the vehicle, but is not limited thereto and may be an acute angle instead of a right angle.

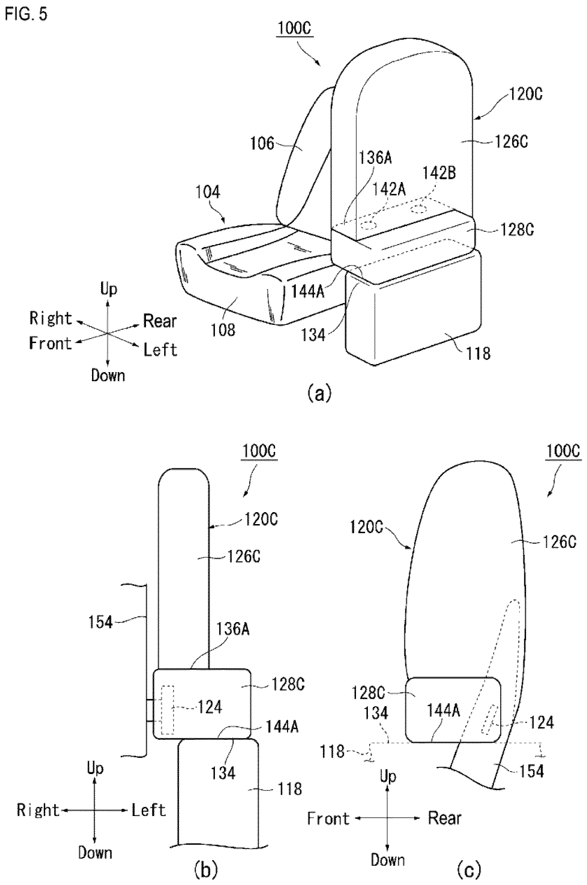

FIG. 5 is a diagram illustrating a side airbag device 100C according to another arrangement which is not part of the present invention. FIG. 5(a) is a diagram illustrating the side airbag device 100C in a state where a cushion 120C is expanded and deployed as viewed from diagonally in front. FIG. 5(b) illustrates the side airbag device 100C in FIG. 5(a) as viewed from a side of the vehicle. FIG. 5(c) illustrates the side airbag device 100 in FIG. 5(a) as viewed from the center side of the vehicle.

The side airbag device 100C is different from the side airbag device 100 described above in that a second chamber 128C of the cushion 120C is installed on a lower side of a lower end part 136A of a first chamber 126C and the inflator 124 is positioned inside the second chamber 128C.

As illustrated in FIG. 5(a), the second chamber 128C is connected to the first chamber 126C via vent holes 142A, 142B provided in the lower end part 136A of the first chamber 126C. Furthermore, as illustrated in FIG. 5(b) and FIG. 5(c), the inflator 124 is secured to the seat frame 154 of the vehicle seat 104.

Thus, the second chamber 128C internally has the inflator 124, and therefore directly receives gas supply from the inflator 124 and can expand and deploy at a higher pressure and earlier than the first chamber 126C that receives gas supply via the vent holes 142A, 142B. Therefore, the second chamber 128C can quickly support the first chamber 126C during expansion and deployment.

Furthermore, the inflator 124 is secured to the seat frame 154, and thus the position of the cushion 120C during expansion and deployment does not change. The inflator 124 secured to the seat frame 154 is positioned inside the second chamber 128C. Therefore, the second chamber 128C suppresses movement across the upper surface 134 of the console box 118 in the vehicle width direction during expansion and deployment. Thereby, the second chamber 128C can receive a sufficient reaction force from the upper surface 134 of the console box 118 during expansion and deployment to support the first chamber 126C.

Furthermore, silicone coating is performed on a bottom surface 144A of the second chamber 128C described above. Therefore, in addition to the connection between the inflator 124 and seat frame 154, the silicone-coated bottom surface 144A makes it more difficult for the second chamber 128C to slide on the upper surface 134 of the console box 118.

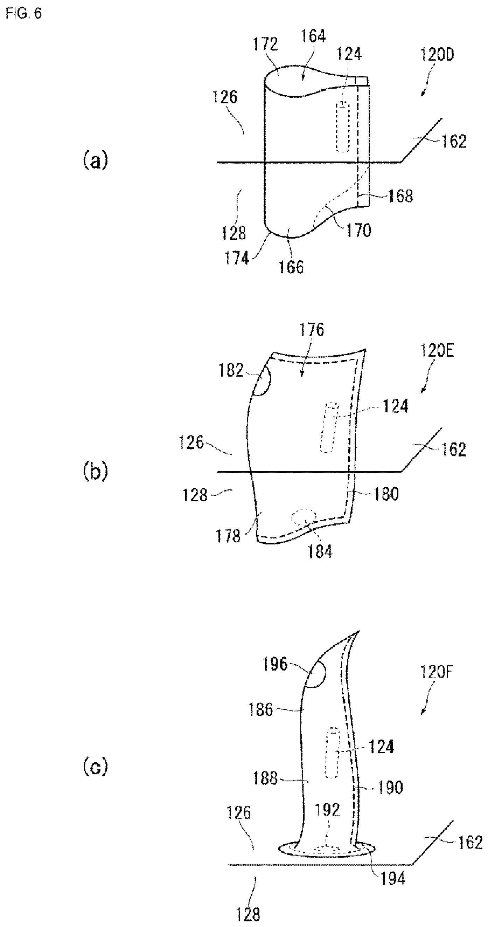

FIG. 6 is a diagram illustrating a modified example of the cushion 120 in FIG. 3. A cushion 120D illustrated in FIG. 6(a) has a dividing part 162 that divides the first chamber 126 and second chamber 128 and an inner tube 164. The inner tube 164 is formed into a tubular shape by sewing on a base fabric 166 along a sewing line 168. In addition, the inner tube 164 penetrates the dividing part 162, and encloses the inflator 124 inside the first chamber 126 side. Furthermore, the inner tube 164 is sewn on the second chamber 128 side of the base fabric 166 along a sewing line 170.

Therefore, the inner tube 164 guides gas from the inflator 124 during expansion and deployment to the first chamber 126 from an open end 172 on the first chamber 126 side, and guides the gas to the second chamber 128 from an open end 174 on the second chamber 128 side. Herein, the sewing line 170 is inclined away from the sewing line 168 toward the open end 174 of the inner tube 164. Therefore, as illustrated in FIG. 6(a), the open end 174 of the inner tube 164 is sewn by the sewing line 170, and thus the opening is smaller than the open end 172.

Therefore, in the cushion 120D, even if gas guided from the open end 174 on the second chamber 128 side to the second chamber 128 tries to backflow to the first chamber 126 side, the open end 174 collapses and deforms such that the backflow can be prevented. In other words, the open end 174 functions as a check valve. Therefore, in the cushion 120D, the second chamber 128 can be maintained at an appropriate internal pressure, thus stabilizing the occupant restraining force.

A cushion 120E illustrated in FIG. 6(b) has a dividing part 162 and an inner tube 176. The inner tube 176 is formed into a sealed type by sewing on a base fabric 178 along a sewing line 180. Note that the inner tube 176 is not limited to one base fabric 178 and may use two base fabrics, so long as the tube can be sewn into a sealed type. Furthermore, the inner tube 176 penetrates the dividing part 162, and encloses the inflator 124 inside the first chamber 126 side. Furthermore, the inner tube 176 has a vent hole 182 provided on the first chamber 126 side and a vent hole 184 provided on the second chamber 128 side.

Therefore, the inner tube 176 guides gas from the inflator 124 during expansion and deployment to the first chamber 126 from the vent hole 182 on the first chamber 126 side, and guides the gas to the second chamber 128 from the vent hole 184 on the second chamber 128 side. Therefore, in the cushion 120E, the size of the vent holes 182, 184 of the inner tube 176 can be adjusted to control the gas supplied from the inflator 124. Therefore, in the cushion 120E, by controlling the gas, the first chamber 126 and second chamber 128 can be maintained at appropriate internal pressures, thus stabilizing the occupant restraining force.

A cushion 120F illustrated in FIG. 6(c) has the dividing part 162 and an inner tube 186. The inner tube 186 is sewn on a base fabric 188 along a sewing line 190 and is sewn on a periphery of a vent hole 192 provided in the dividing part 162 along a sewing line 194. In addition, the inner tube 186 encloses the inflator 124 inside the first chamber 126 side, and a vent hole 196 is provided on the first chamber 126 side.

Therefore, the inner tube 186 guides gas from the inflator 124 during expansion and deployment to the first chamber 126 from the vent hole 196 on the first chamber 126 side, and guides the gas to the second chamber 128 from the vent hole 192 of the dividing part 162. Therefore, in the cushion 120F, the size of the vent holes 192, 196 can be adjusted to control the gas supplied from the inflator 124. Therefore, with the cushion 120F, the first chamber 126 and second chamber 128 can be maintained at an appropriate internal pressure, thus stabilizing the occupant restraining force.

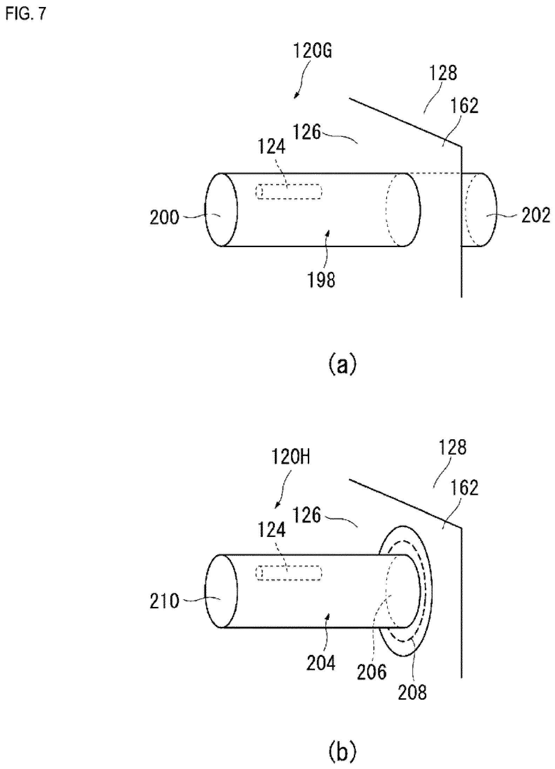

FIG. 7 is a diagram illustrating another modified example of the cushion 120 in FIG. 3. A cushion 120G illustrated in FIG. 7(a) has an inner tube 198 and the dividing part 162 that divides the first chamber 126 and second chamber 128. The inner tube 198 has a cylindrical shape and passes through the dividing part 162. Furthermore, the inner tube 198 has an open end 200 on the first chamber 126 side and an open end 202 on the second chamber 128 side, and encloses the inflator 124 inside the first chamber 126 side.

Therefore, the inner tube 198 guides gas from the inflator 124 during expansion and deployment to the first chamber 126 from the open end 200 on the first chamber 126 side, and guides the gas to the second chamber 128 from the open end 202 on the second chamber 128 side. Therefore, in the cushion 120G, the first chamber 126 and second chamber 128 are supplied with gas to enable expansion and deployment.

A cushion 120H illustrated in FIG. 7(b) has the dividing part 162 and an inner tube 204. The inner tube 204 has a cylindrical shape and is sewn on a periphery of the vent hole 206 provided in the dividing part 162 along the sewing line 208. In addition, the inner tube 204 encloses the inflator 124 inside the first chamber 126 side, and has an open end 210 on the first chamber 126 side.

Therefore, the inner tube 204 guides gas from the inflator 124 during expansion and deployment to the first chamber 126 from the open end 210 on the first chamber 126 side, and guides the gas to the second chamber 128 from the vent hole 206 of the dividing part 162. Therefore, in the cushion 120H, the size of the vent hole 206 can be adjusted to control the gas supplied from the inflator 124. Therefore, with the cushion 120H, the first chamber 126 and second chamber 128 can be maintained at an appropriate internal pressure, thus stabilizing the occupant restraining force.

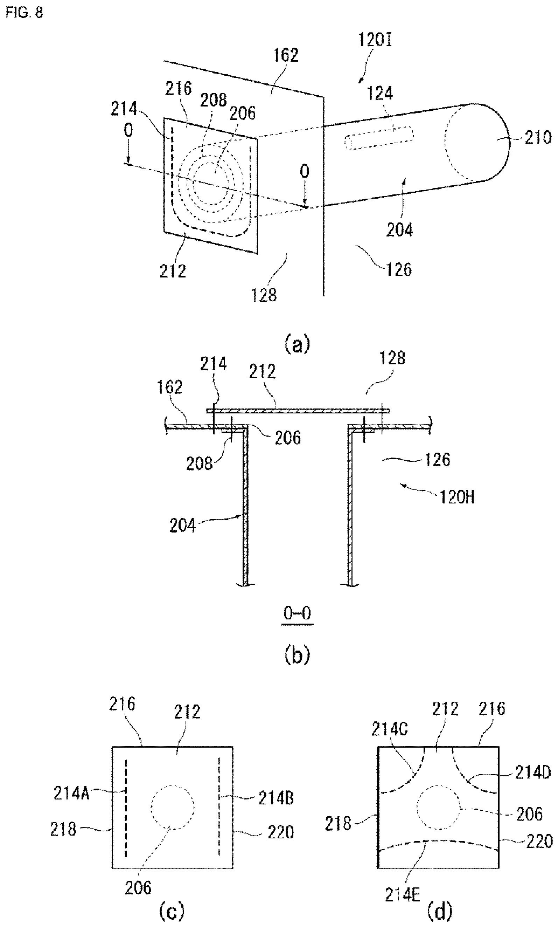

FIG. 8 is a diagram illustrating a modified example of the cushion 120H in FIG. 7(b). A cushion 1201 illustrated in FIG. 8(a) and FIG. 8(b) is sewn on a separate base fabric 212 along a sewing line 214 on the second chamber 128 side of the vent hole 206 of the dividing part 162. Note that FIG. 8(b) is a cross-sectional view along O-O in FIG. 8(a).

The separate base fabric 212 covers the vent hole 206 from the second chamber 128 side as illustrated in FIG. 8(a). However, one side 216 of the separate base fabric 212 is not sewn by the sewing line 214.

Therefore, the inner tube 204 illustrated in FIG. 8(a) guides gas from the inflator 124 during expansion and deployment to the first chamber 126 from the open end 210 on the first chamber 126 side. Furthermore, the inner tube 204 guides gas from the inflator 124 during expansion and deployment to the second chamber 128 from the vent hole 206 of the dividing part 162 through a gap between the one side 216 of the separate base fabric 212 and the dividing part 162.

Therefore, with the cushion 120I, even if gas guided from the vent hole 206 to the second chamber 128 tries to backflow to the first chamber 126 side, the gap between the one side 216 of the separate base fabric 212 and dividing part 162 is closed such that the backflow can be prevented. In other words, the separate base fabric 212 functions as a check valve. Therefore, in the cushion 120I, the second chamber 128 can be maintained at an appropriate internal pressure, thus stabilizing the occupant restraining force.

Furthermore, the sewing line 214 for sewing the separate base fabric 212 is not particularly limited, so long as the gap between the separate base fabric 212 and dividing part 162 can be ensured and the separate base fabric 212 can function as a check valve. As an example, only two opposite sides 218, 220 of the separate base fabric 212 may be sewn as with sewing lines 214A, 214B indicated in FIG. 8(c). Furthermore, as with sewing lines 214C, 214D, 214E indicated in FIG. 8(d), two adjacent sides 216, 218 of the separate base fabric 212 may be sewn, two adjacent sides 216, 220 may be sewn, and two opposite sides 218, 220 may be sewn. Note that the a peripheral structure of the vent hole 206 indicated in FIG. 8(a), FIG. 8(b), and FIG. 8(c) may not only be applied to the cushion 120H in FIG. 7(b) but also to the cushion 120F in FIG. 6(c)

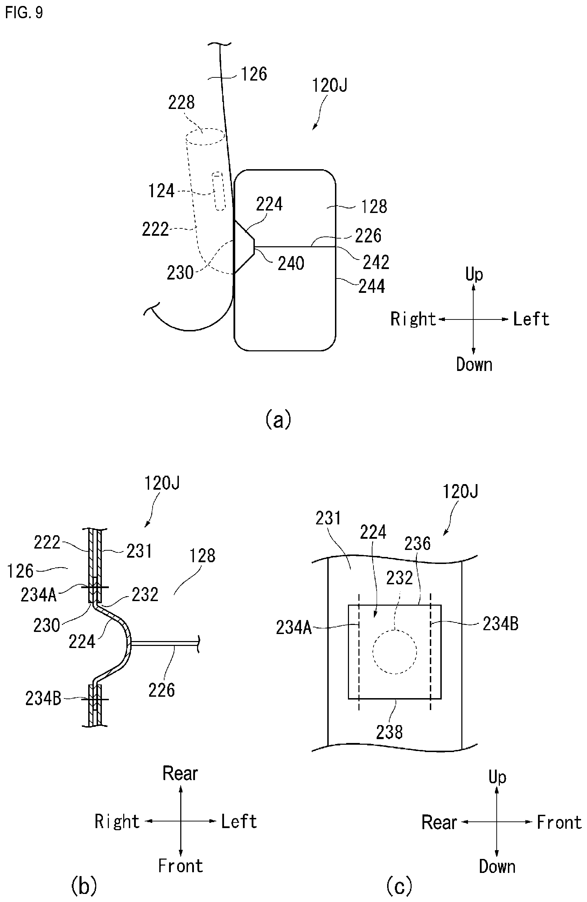

FIG. 9 is a diagram illustrating yet another modified example of the cushion 120 in FIG. 3. A cushion 120J illustrated in FIG. 9(a) has an inner tube 222, a separate base fabric 224, and a strap 226. The inner tube 222 has a cylindrical shape, has an open end 228 on the first chamber 126 side, and encloses the inflator 124 inside the first chamber 126 side.

Furthermore, the inner tube 222 has an open end 230 on the second chamber 128 side. The open end 230 of the inner tube 222 is sewn along sewing lines 234A, 234B along with the separate base fabric 224 in a periphery of a vent hole 232 provided in a dividing part 231 that divides the first chamber 126 and second chamber 128 as illustrated in FIG. 9(b).

The separate base fabric 224 covers the vent hole 232 from the first chamber 126 side as illustrated in FIG. 9(c). However, two opposite sides 236, 238 of the separate base fabric 224 are not sewn by the sewing lines 234A, 234B. Note that in FIG. 9(c), the inner tube 222 is omitted.

Therefore, during expansion and deployment, the inner tube 222 guides gas from the inflator 124 to the first chamber 126 through the open end 228 on the first chamber 126 side. Furthermore, during expansion and deployment, the inner tube 222 guides gas from the inflator 124 to the second chamber 128 from a gap between the dividing part 231 and the two sides 236, 238 of the separate base fabric 224 through the vent hole 232.

In addition, the strap 226 has a first end 240 attached to the separate base fabric 224 and a second end 242 attached to a site 244 on the second chamber 128 on a far side from the first chamber 126, as illustrated in FIG. 9(a). Therefore, with the cushion 120I, when the second chamber 128 expands and deploys as illustrated in FIG. 9(a) and FIG. 9(b), the separate base fabric 224 is tensioned by the strap 226, such that the gap between the dividing part 231 and the two sides 236, 238 of the separate base fabric 224 closes.

Thereby, in the cushion 120I, even if gas guided from the vent hole 232 to the second chamber 128 tries to backflow to the first chamber 126 side, the separate base fabric 224 functions as a check valve, such that the backflow can be prevented. Therefore, in the cushion 120I, the second chamber 128 can be maintained at an appropriate internal pressure, thus stabilizing the occupant restraining force.

Preferred Embodiments of the present invention were described with reference to the appended drawings, but it goes without saying that the present invention is not limited to such examples. It is clear that a person of ordinary skill in the art could conceive various modifications or revisions within the scope set forth by the claims, and it would be understood that these modifications or revisions would belong to the technical scope of the present invention.

Furthermore, examples in which the side airbag devices 100, 100A, 100B, 100C according to the present invention are applied to an automobile were described in the abovementioned Embodiments. However, in addition to automobiles, the present invention can be applied to aircrafts, ships, and the like, with the same operations and effects capable of being exerted.

### INDUSTRIAL APPLICABILITY

The present invention can be applied to a side airbag device provided with a bag-shaped cushion that expands and deploys to a side of an occupant of a vehicle seat in the event of a vehicle side impact or the like.

### DESCRIPTION OF CODES

100, 100A, 100B, 100C. Side airbag device, 102. Vehicle, 104, 110. Vehicle seat, 106, 112. Seatback, 108, 114. Seat cushion, 116. Side door, 118. Console box, 120, 120A, 120B, 120C, 120D, 120E, 120F, 120H, 120I, 120J. Cushion, 122. Occupant, 124. Inflator, 126, 126A, 126B, 126C. First chamber, 128, 128A, 128B, 128C. Second chamber, 130. Shoulder, 132. Waist, 134. Upper surface of console box, 136. Lower end part of first chamber, 138. Side surface of console box, 140. Gap, 142, 142A, 142B, 182, 184, 192, 196, 206, 232. Vent hole, 144, 144A. Bottom surface of second chamber, 146, 146A, 146B. Side surface of second chamber, 148, 148A. Upper corner part of second chamber, 150. Main body of inflator, 152. Stud bolt, 154. Seat frame, 156. Tether, 158. Rear end of second chamber, 160. Front end of second chamber, 162, 231. Dividing part, 164, 176, 186, 198, 204, 222. Inner tube, 166, 178, 188. Base fabric of inner tube, 168, 170, 180, 190, 194, 208, 214, 214A, 214B, 214C, 214D, 214E, 234A, 234B. Sewing line, 172, 174, 200, 202, 210, 228, 230. Open end of inner tube, 212, 224. Separate base fabric, 216, 218, 220, 236, 238. Side of separate base fabric, 226. Strap, 240. First end of strap, 242. Second end of strap, 244. Site of second chamber

## Claims

1. A side airbag device (100, 100A, 100B, 100C), comprising:
an inflator (124) that supplies gas; and
a bag-shaped cushion (120, 120A, 120B, 120C, 120D, 120E, 120F, 120H, 120I, 120J) that expands and deploys on a far side of a vehicle seat (104, 110) using the gas from the inflator (124); wherein
the cushion (120, 120A, 120B, 120C, 120D, 120E, 120F, 120H, 120I, 120J) includes:
a first chamber (126, 126A, 126B, 126C) that restrains an occupant (122) during expansion and deployment, the first chamber (126, 126A, 126B, 126C) expanding and deploying at a position higher than an upper surface of a console box (134) disposed between the vehicle seat (104, 110) and an adjacent seat positioned on the far side of the vehicle seat (104, 110); and
a second chamber (128, 128A, 128B, 128C) connected to the first chamber (126, 126A, 126B, 126C) via a vent hole (142, 142A, 142B, 182, 184, 192, 196, 206, 232), the second chamber (128, 128A, 128B, 128C) being in frictional contact with the upper surface of the console box (134) during expansion and deployment, whereinthe second chamber (128, 128A, 128B, 128C) is provided on a far side on a lower end part of the first chamber (126, 126A, 126B, 126C), , **characterized in that** the inflator (124) is positioned inside the first chamber (126, 126A, 126B, 126C), wherein the first chamber (126, 126A, 126B, 126C) has a higher internal pressure than the second chamber (128, 128A, 128B, 128C) and caves into the second chamber (128, 128A, 128B, 128C) during expansion and deployment.

2. The side airbag device (100, 100A, 100B, 100C) according to claim 1, wherein a near-side side surface of the second chamber (128, 128A, 128B, 128C) is inclined upwardly away from the vehicle seat (104, 110) and the second chamber (128, 128A, 128B, 128C) has a triangular shape when viewed from the front of the vehicle (102), and is connected to the first chamber (126, 126A, 126B, 126C) on a side surface of the near side

3. The side airbag device (100, 100A, 100B, 100C) according to any one of claims 1 or 2, wherein the second chamber (128, 128A, 128B, 128C) has a rectangular shape when viewed from the front of the vehicle (102), and is connected to the first chamber (126, 126A, 126B, 126C) on a near-side side surface.

4. The side airbag device (100, 100A, 100B, 100C) according to any one of claims 1 to 3, wherein the coefficient of friction of a bottom surface of the second chamber (144,144A) that is in frictional contact with the upper surface of the console box (134) is larger than the coefficient of friction of another surface.

5. The side airbag device (100, 100A, 100B, 100C) according to claim 4, wherein silicone coating is performed on the bottom surface of the second chamber (144,144A).

6. The side airbag device (100, 100A, 100B, 100C) according to any one of claims 1 to 5, further comprising a taut tether (156) that reaches a rear end of the second chamber (128, 128A, 128B, 128C) from a front end of the second chamber (128, 128A, 128B, 128C) via a seat frame (154) of the vehicle seat (104, 110) during expansion and deployment of the second chamber (128, 128A, 128B, 128C).

7. The side airbag device (100, 100A, 100B, 100C) according to any one of claims 4 to 6, wherein the lower end part of the first chamber (136) is positioned above the bottom surface of the second chamber (144,144A).

8. The side airbag device (100, 100A, 100B, 100C) according to any one of claims 1 to 7, wherein silicone coating is performed on the bottom surface of the second chamber (144,144A).

9. The side airbag device (100, 100A, 100B, 100C) according to any one of claims 1 to 8, further comprising:
a check valve provided in the vent hole (142, 142A, 142B, 182, 184, 192, 196, 206, 232), wherein
the check valve prevents backflow of gas from the second chamber (128, 128A, 128B, 128C) that does not have the inflator (124) inside to the first chamber (126,126A,126B,126C) that has the inflator (124) inside.

## Patentansprüche

1. Seitenairbagvorrichtung (100, 100A, 100B, 100C), umfassend:
einen Gasgenerator (124), der ein Gas zuführt; und
ein beutelförmiges Kissen (120, 120A, 120B, 120C, 120D, 120E, 120F, 120H, 120I, 120J), das sich auf einer entfernten Seite eines Fahrzeugsitzes (104, 110) unter Verwendung des Gases von dem Gasgenerator (124) ausdehnt und entfaltet; wobei
das Kissen (120, 120A, 120B, 120C, 120D, 120E, 120F, 120H, 1201, 120J) einschließt:
eine erste Kammer (126, 126A, 126B, 126C), die einen Insassen (122) während der Ausdehnung und Entfaltung zurückhält, wobei sich die erste Kammer (126, 126A, 126B, 126C) an einer Position ausdehnt und entfaltet, die höher als eine obere Oberfläche einer Konsolenbox (134) ist, die zwischen dem Fahrzeugsitz (104, 110) und einem benachbarten Sitz angeordnet ist, der auf der entfernten Seite des Fahrzeugsitzes (104, 110) positioniert ist; und
eine zweite Kammer (128, 128A, 128B, 128C), die mit der ersten Kammer (126, 126A, 126B, 126C) über ein Entlüftungsloch (142, 142A, 142B, 182, 184, 192, 196, 206, 232) verbunden ist, wobei die zweite Kammer (128, 128A, 128B, 128C) in Reibungskontakt mit der oberen Oberfläche der Konsolenbox (134) während der Ausdehnung und Entfaltung steht, wobei die zweite Kammer (128, 128A, 128B, 128C) auf einer entfernten Seite an einem unteren Endteil der ersten Kammer (126, 126A, 126B, 126C) bereitgestellt ist,
**dadurch gekennzeichnet, dass** der Gasgenerator (124) im Inneren der ersten Kammer (126, 126A, 126B, 126C) positioniert ist, wobei die erste Kammer (126, 126A, 126B, 126C) einen höheren Innendruck als die zweite Kammer (128, 128A, 128B, 128C) aufweist und in die zweite Kammer (128, 128A, 128B, 128C) während der Ausdehnung und Entfaltung einsinkt.

2. Seitenairbagvorrichtung (100, 100A, 100B, 100C) nach Anspruch 1, wobei eine nahseitige Seitenoberfläche der zweiten Kammer (128, 128A, 128B, 128C) von dem Fahrzeugsitz (104, 110) weg nach oben geneigt ist und die zweite Kammer (128, 128A, 128B, 128C) eine dreieckige Form beim Betrachten von vorne des Fahrzeugs (102) aufweist und mit der ersten Kammer (126, 126A, 126B, 126C) auf einer Seitenoberfläche der Beifahrerseite verbunden ist

3. Seitenairbagvorrichtung (100, 100A, 100B, 100C) nach einem der Ansprüche 1 oder 2, wobei die zweite Kammer (128, 128A, 128B, 128C) eine dreieckige Form beim Betrachten von vorne des Fahrzeugs (102) aufweist und mit der ersten Kammer (126, 126A, 126B, 126C) auf einer nahseitigen Seitenoberfläche verbunden ist.

4. Die Seitenairbagvorrichtung (100, 100A, 100B, 100C) nach einem der Ansprüche 1 bis 3, wobei der Reibungskoeffizient einer unteren Oberfläche der zweiten Kammer (144, 144A), die in Reibungskontakt mit der oberen Oberfläche der Konsolenbox (134) steht, größer als der Reibungskoeffizient einer anderen Oberfläche ist.

5. Seitenairbagvorrichtung (100, 100A, 100B, 100C) nach Anspruch 4, wobei ein Silikonbeschichten auf der unteren Oberfläche der zweiten Kammer (144, 144A) durchgeführt wird.

6. Seitenairbagvorrichtung (100, 100A, 100B, 100C) nach einem der Ansprüche 1 bis 5, ferner umfassend einen Spanngurt (156), der ein hinteres Ende der zweiten Kammer (128, 128A, 128B, 128C) von einem vorderen Ende der zweiten Kammer (128, 128A, 128B, 128C) über einen Sitzrahmen (154) des Fahrzeugsitzes (104, 110) während der Ausdehnung und Entfaltung der zweiten Kammer (128, 128A, 128B, 128C) erreicht.

7. Seitenairbagvorrichtung (100, 100A, 100B, 100C) nach einem der Ansprüche 4 bis 6, wobei der untere Endteil der ersten Kammer (136) über der unteren Oberfläche der zweiten Kammer (144, 144A) positioniert ist.

8. Seitenairbagvorrichtung (100, 100A, 100B, 100C) nach einem der Ansprüche 1 bis 7, wobei ein Silikonbeschichten auf der unteren Oberfläche der zweiten Kammer (144, 144A) durchgeführt wird.

9. Seitenairbagvorrichtung (100, 100A, 100B, 100C) nach einem der Ansprüche 1 bis 8; ferner umfassend:
ein Rückschlagventil, das in dem Entlüftungsloch (142, 142A, 142B, 182, 184, 192, 196, 206, 232) bereitgestellt ist, wobei
das Rückschlagventil einen Rückfluss von Gas aus der zweiten Kammer (128, 128A, 128B, 128C), in deren Inneren kein Gasgenerator (124) ist, zu der ersten Kammer (126, 126A, 126B, 126C), in deren Inneren der Gasgenerator (124) ist, verhindert.

## Revendications

1. Dispositif de coussin de sécurité gonflable latéral (100, 100A, 100B, 100C), comprenant :
un gonfleur (124) qui alimente du gaz ; et
un coussin en forme de sac (120, 120A, 120B, 120C, 120D, 120E, 120F, 120H, 1201, 120J) qui se dilate et se déploie sur un côté éloigné d'un siège de véhicule (104, 110) au moyen du gaz du gonfleur (124) ; dans lequel
le coussin (120, 120A, 120B, 120C, 120D, 120E, 120F, 120H, 120I, 120J) comporte :
une première chambre (126, 126A, 126B, 126C) qui retient un occupant (122) pendant la dilatation et le déploiement, la première chambre (126, 126A, 126B, 126C) se dilatant et se déployant au niveau d'une position plus élevée qu'une surface supérieure d'un boîtier de console (134) disposé entre le siège du véhicule (104, 110) et un siège adjacent positionné sur le côté éloigné du siège du véhicule (104, 110) ; et
une seconde chambre (128, 128A, 128B, 128C) reliée à la première chambre (126, 126A, 126B, 126C) par l'intermédiaire d'un trou d'évent (142, 142A, 142B, 182, 184, 192, 196, 206, 232), la seconde chambre (128, 128A, 128B, 128C) étant en contact par frottement avec la surface supérieure du boîtier de console (134) pendant la dilatation et le déploiement, dans lequel la seconde chambre (128, 128A, 128B, 128C) est fournie sur un coté éloigné sur une partie d'extrémité inférieure de la première chambre (126, 126A, 126B, 126C), **caractérisé en ce que** le gonfleur (124) est positionné à l'intérieur de la première chambre (126, 126A, 126B, 126C), dans lequel la première chambre (126, 126A, 126B, 126C) a une pression interne plus élevée que la seconde chambre (128, 128A, 128B, 128C) et s'enfonce dans la seconde chambre (128, 128A, 128B, 128C) pendant la dilatation et le déploiement.

2. Dispositif de coussin de sécurité gonflable latéral (100, 100A, 100B, 100C) selon la revendication 1, dans lequel une surface latérale de côté proche de la seconde chambre (128, 128A, 128B, 128C) est inclinée vers le haut à l'écart du siège du véhicule (104, 110) et la seconde chambre (128, 128A, 128B, 128C) a une forme triangulaire lorsqu'elle est vue de l'avant du véhicule (102), et est reliée à la première chambre (126, 126A, 126B, 126C) sur une surface latérale du côté proche.

3. Dispositif de coussin de sécurité gonflable latéral (100, 100A, 100B, 100C) selon l'une quelconque des revendications 1 ou 2, dans lequel la seconde chambre (128, 128A, 128B, 128C) a une forme rectangulaire lorsqu'elle est vue de l'avant du véhicule (102), et est reliée à la première
chambre (126, 126A, 126B, 126C) sur une surface latérale de côté proche.

4. Dispositif de coussin de sécurité gonflable latéral (100, 100A, 100B, 100C) selon l'une quelconque des revendications 1 à 3, dans lequel le coefficient de frottement d'une surface inférieure de la seconde chambre (144, 144A) qui est en contact par frottement avec la surface supérieure du boîtier de console (134) est plus grand que le coefficient de frottement d'une autre surface.

5. Dispositif de coussin de sécurité gonflable latéral (100, 100A, 100B, 100C) selon la revendication 4, dans lequel un revêtement de silicone est effectué sur la surface inférieure de la seconde chambre (144, 144A).

6. Dispositif de coussin de sécurité gonflable latéral (100, 100A, 100B, 100C) selon l'une quelconque des revendications 1 à 5, comprenant en outre une sangle tendue (156) qui atteint une extrémité arrière de la seconde
chambre (128, 128A, 128B, 128C) à partir d'une extrémité avant de la seconde chambre (128, 128A, 128B, 128C) par l'intermédiaire d'un cadre de siège (154) du siège du véhicule (104, 110) pendant la dilatation et le déploiement de la seconde chambre (128, 128A, 128B, 128C).

7. Dispositif de coussin de sécurité gonflable latéral (100, 100A, 100B, 100C) selon l'une quelconque des revendications 4 à 6, dans lequel la partie d'extrémité inférieure de la première chambre (136) est positionnée au-dessus de la surface inférieure de la seconde chambre (144, 144A).

8. Dispositif de coussin de sécurité gonflable latéral (100, 100A, 100B, 100C) selon l'une quelconque des revendications 1 à 7, dans lequel un revêtement de silicone est effectué sur la surface inférieure de la seconde chambre (144, 144A).

9. Dispositif de coussin de sécurité gonflable latéral (100, 100A, 100B, 100C) selon l'une quelconque des revendications 1 à 8, comprenant en outre :
un clapet anti-retour fourni dans le trou d'évent (142, 142A, 142B, 182, 184, 192, 196, 206, 232), dans lequel
le clapet anti-retour empêche le reflux de gaz de la seconde chambre (128, 128A, 128B, 128C) qui n'a pas le gonfleur (124) à l'intérieur vers la première chambre (126, 126A, 126B, 126C) qui a le gonfleur (124) à l'intérieur.
